# EUROPEAN PATENT APPLICATION

(11) **EP 2 323 101 A2**
(43) Date of publication of application: **18.05.2011**
(21) Application number: 10306105.7
(22) Date of filing: 11.10.2010
(51) Int. Cl.: G06T 7/00

(54) **Method for 3D spine and full 3D trunk imaging fusion in standing position**

(30) Priority: 11.10.2009 US 250539 P
(71) Applicant: Axs Ingenierie, 76600 Le Havre (FR)
(72) Inventor: Elbaroudi, Fouad, 33600 Pessac (FR); Blanchard, Bertrand, 33000 Bordeaux (FR)
(74) Representative: Catherine, Alain

(57) **Abstract**

A method for merging (or fusing) three dimensional images or reconstruction of set of bone joints and the full three dimensional image of the related external shape.

This method allows further analysis of the 3 dimensional parameters and volumetric parameters or the combined image for medical applications.

The 3D reconstruction or image of the set of bone joints can be issued from any stereo x-ray system or rendering (hereafter called Stereo Acquisition) such as and not limited to Biomod 3S system or the EOS system.

This method can by used to, but is not limited to, the fusion of a 3D full image of the trunk with the 3D image or reconstruction of the spine for a patient in standing position. In this case, the 3D Trunk shape image or reconstruction can be issued from any 3D optical scan for trunk shape applications such as, but not limited to the ORTEN or RODIN4D systems.

## Description

### BACKGROUND OF THE INVENTION

The present invention is in the technical field of biomedical simulation and reconstruction software.

More particularly, the present invention is in the technical field of fusion of images between different imaging modalities. More particularly, the present invention is in the technical field of 3 dimensional imaging and simulation, and further processing and analysis of the information contained to obtain 3D parameters. More particularly, the present invention is in the technical field of the use of 3D parameters and models for medical applications.

In terms of prior art, we would like to reference patent PCT/FR2007051742 (WO 2008/012479) by Fouad Elbaroudi and Bertrand Blanchard, ("Computerized imaging method for a three-dimensional reconstruction from two-dimensional radiological images; implementation device"). One of the application of this patent, which is a fusion method for between the spine and back shape.

Additional prior art has been published in the area of computed tomography 3D rendering techniques, with the major shortcoming that (1) the body is lying on a table and (2) XR doses are very high.

Additional prior art has been published by the company that has designed and is manufacturing the EOS system, with the major shortcoming that only partial trunk surface 3D reconstruction/imaging is performed.

Additional prior art has been published in the area of optical 3D reconstruction of shapes and surfaces, with the major shortcoming that the images obtained have not be fused with XR imaging modalities.

Additional prior art has been published in the area of 3D reconstruction of the spine with the major shortcoming that the 3D reconstruction of the spine has not been fused with the entire shape of the trunk.

### SUMMARY OF THE INVENTION

The present invention is related to a specific method for merging (or fusing) three dimensional reconstruction or images of set of bone joints and the full three dimensional image of the related external shape.

This method allows further analysis of the 3 dimensional parameters and volumetric parameters for medical applications.

The 3D reconstruction or image of the set of bone joints can be issued from any stereo x-ray system or rendering (hereafter called Stereo Acquisition) such as and not limited to Biomod 3S system or the EOS system.

The 3D Trunk shape image or reconstruction can be issued from any 3D optical scan for trunk shape applications such as, but not limited to the ORTEN or RODIN4D systems.

For easy understanding only, the following description relates to the application of such method to the spine and trunk of a patient in standing position.

### BRIEF DESCRIPTION OF THE DRAWINGS

Fig. 1 is a visual illustration of the 3D fusion principle and results
Fig. 2 is an illustration of an example of a XRay Stereotactic imaging system and simultaneous optical acquisition
Fig. 3-A is an illustration of an example of a 3D optical Scan of the external shape such as theTrunk using 4 light based acquisitions set up to perform four simultaneous acquisitions.
Fig. 3-B is an illustration of an example of a 3D optical Scan of the external shape such as the trunk using one light based acquisitions set up combined with a turn table to perform 4 successive acquisitions.
Fig. 4 is an illustration of the principle used to merge (or fuse) the Optical Acquisition/ reconstruction issued from Fig. 2 and the optical Acquisition/reconstruction issued either from Fig. 3-A or Fig. 3-B
Fig. 5 is an illustration of the principle used to adjust the position of the 3D reconstruction (or image) of the Spine into the full 3D shape of the trunk.
Fig..6 is an illustration of the principle of the method and computed algorithms used to perform an accurate fusion of a 3D image or reconstruction of the spine with a full 3D image of the truck, which include specific algorithms to eliminate the patient movement between the different imaging sequences and accurately reposition the spine in the 3D volume of the trunk.

### DETAILED DESCRIPTION OF THE INVENTION

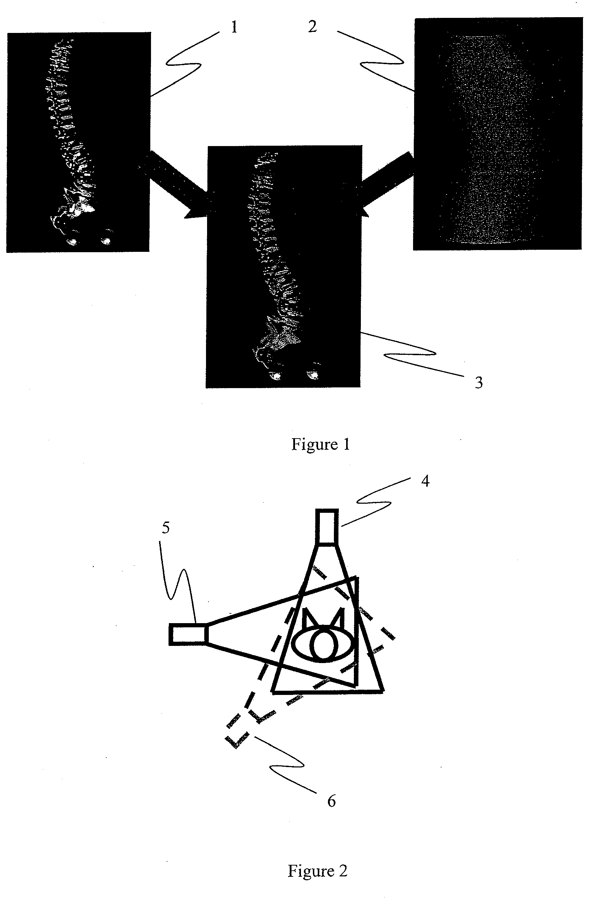

Referring now to the invention in more detail, in Fig. 1 there is shown the principel by witch a 3D spine reconstruction issued from any stereo X Ray system (1) is merged (or fused) with a 3D complete trunk shape reconstruction (2) to obtain 3D spine, trunk and rib cage reconstruction for volumetric assessment (3).

The 3D spine reconstruction (1) can be issued form any stereotactic XR system, that could be either monomplane systems ( two separate acquisitions needed) or a by-plane system ( one acquisition system, such as in the EOS system, but not limited to this system).

In more detail, still referring to the invention and specifically to the creation of (1), Fig. 2 shows how a stereo X ray acquisition system (4 and 5 is a simplified view of a XR emitting device and a XR digital Imaging Detector) can be used simultaneously or in sequences with an optical acquisition set up (6 is a simplified view of an optical acquisition system composed of a light source and a optical detector). The Optical Acquisition System 6 will create a 3D image (or shape) of back shape surface of the subject hereafter designed as "S1".

In all these set up, the patient is in standing position.

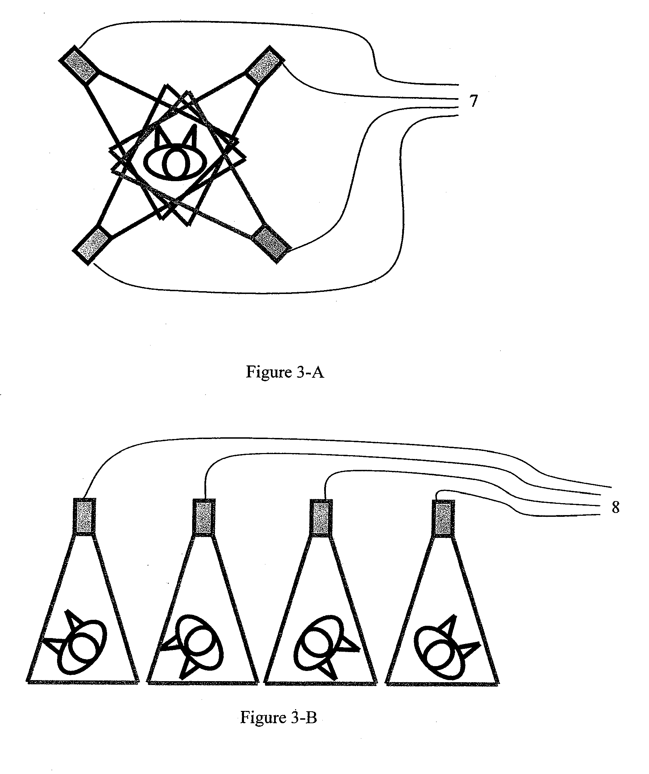

In more detail, still referring to the invention and specifically to discuss the 3D complete trunk shape reconstruction (2), Fig. 3-A explains how four optical acquisitions with equipment 6 can be performed simultaneously (7). One of theses four optical acquisitions set ups will generate a back shape surface of the subject hereafter designed as "S2".

In more detail, still referring to the invention and specifically to discuss the 3D complete trunk shape reconstruction (2) Fig. 3-B explains how four optical acquisitions performed successively (8). The subject is in standing position on a turn table or similar accessory to perform the four successive positions relating to the four optical acquisitions. One of theses four optical acquisitions will generate a complete 3D back shape surface of the subject hereafter designed as "S3".

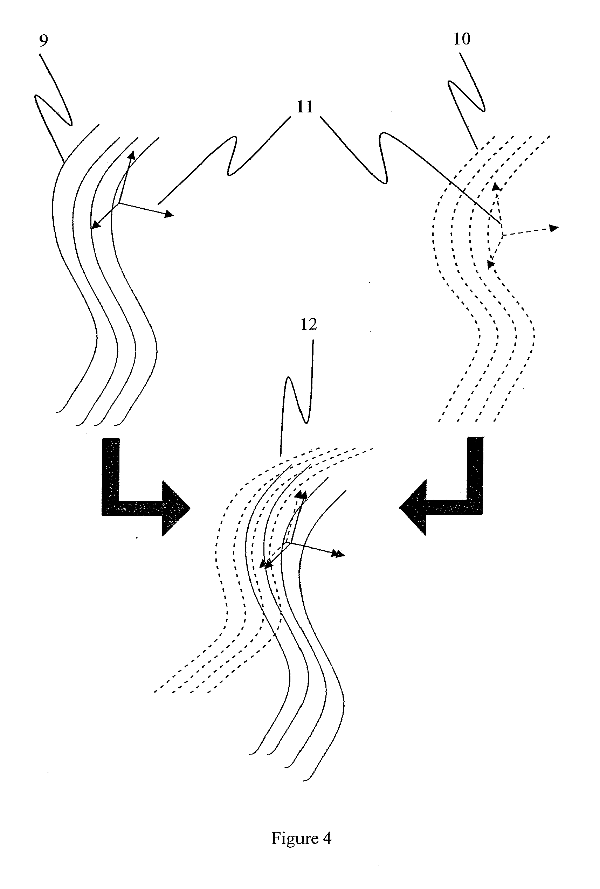

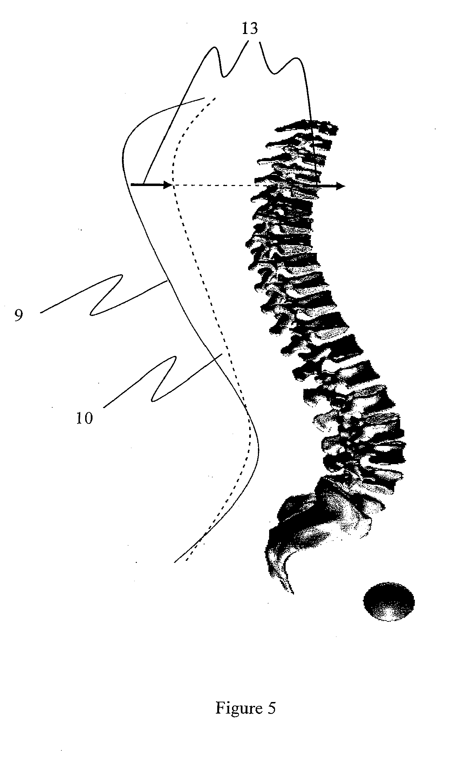

In more detail, still referring to the invention and specifically to (3), Fig. 4 and Fig. 5 illustrate the computerized principle used to evaluate, measure and correct the movements of the subject between the Optical Acquisition (9) performed as shown is Fig. 2 and the optical acquisition (10) as shown in Fig. 3-A or Fig. 3-B, prior to merging (or fusing) the 3D spine reconstruction and the 3D trunk shape reconstruction.

Prior to the acquisitions, an undeformable (or rigid) 3D calibration object (11) is placed on the object to image, and becomes a common part of S1 and S2 or S1 and S3. The aim of this 3D calibration object is to reposition both S1 and S2 or S1 and S3 in the same 3D / special referential system (12).

The two back shapes ([S1] and [S2] or [S1] and [S3]) are placed in the same special reference system and the movements of the subject between the two acquisitions can be evaluated and corrected by the computing algorithm. The correction (13) is applied to the 3D spine reconstruction to be fitted to the actual subject positioning during the trunk shape acquisition, as illustrated on figure 4.

As a result of this computing sequence, the reconstructed 3D spine and the 3D acquisition of the shape of the back are positioned in the same reference system, and their position is adjusted in reference of each other. The present invention guarantees this positioning.

At this final step the three dimensional spine reconstruction and digitalized trunk shape are merged in the same axis system. The patient movements are taken into account and corrected during the merging process.

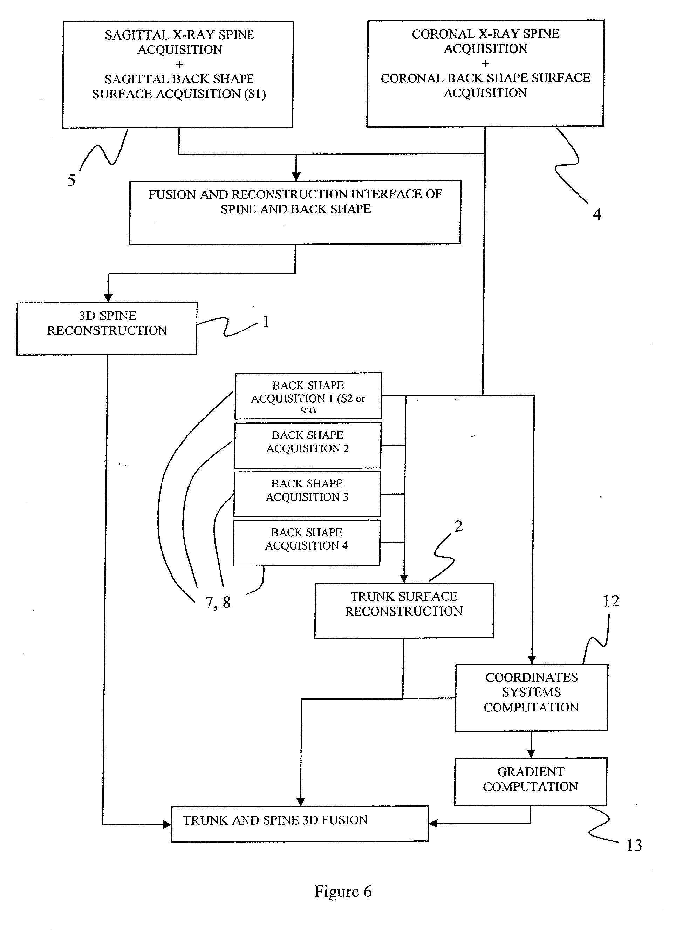

In summary, Figure.6 is an illustration of the principle of the method and computed algorithms used to perform an accurate fusion of a 3D image or reconstruction of the spine with a full 3D image of the truck, which include specific algorithms to eliminate the patient movement between the different imaging sequences and accurately reposition the spine in the 3D volume of the trunk.

The advantages of the present invention include, without limitation, (a) full compatibility with the different XRay stereotactic imaging apparatus and methods, (b) full compatibility with the different optical stereotactic imaging apparatus and methods (c) the elimination of patient movements between the different acquisition of images (d) the creation of a full 3D model of the trunk in witch a 3D model of the spine is accurately positioned (e) the subsequent analysis of this full 3D model to obtain an accurate analytical description that includes distances, angles in any 2D plane, (f) the subsequent analysis of this full 3D model to obtain an accurate volumetric of the trunck in relation to the position of the spine (g) that the algorithms are compatible with "of the self" hardware and/or clout computing platforms (h) that the 3D images and models that are elaborated and compatible with standard image exchange protocols in healthcare.

In broad embodiment, the present invention is a method to fuse (merge) a full 3D image of the trunk and a 3D image (or reconstruction) of the spine into an accurate 3D image, for patients in standing position, to offer a 3D digital image that can be further processed to enables better delivery of care. (See claims)

While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above described embodiment, method, and examples, but by all embodiments and methods within the scope and spirit of the invention.

The present invention is related to a specific

## Claims

1. a method for merging (or fusing) three dimensional reconstruction or images of set of bone joints and the full three dimensional image of the related external shape.

2. a method that allows further analysis of the 3 dimensional parameters and volumetric parameters for medical applications.

3. a method for performing the fusion of a stereotactic image or reconstruction of the spine with a full (360 degrees) stereotactic image of the truck in standing position

4. a method to obtain the full three dimensional characterization (angles, distances) of the spine, the shape of the trunk and the relative positions of the the spine to the surface of the trunk, in any 2D cross section

5. a method to obtain the full volumetric analysis of the truck, or sections of the trunk

6. the application of the method per claim number 1 and the data generated per claims number 2 and 3 to medicine in general, and in particular in following medical fields:
(a) Spinal Deformity characterization
(b) Orthopedic surgery planification
(c) Orthopedic surgery quality control
(d) Rib cage 2D and volumetric measurements
(e) Respiratory Functional Assesment
(f) Detection of spine deformities
(g) Follow up and / or personalization of rehabilitation protocols
(h) Deformity Brace design and / or selection
(e) Spine Implant, design and / or selection
(j) Correlation of Aesthetic parameters with the spine position and shape

7. the application of the method per claim number 1 and the data generated per claims number 2 and 3 to life sciences in general, and in particular in animal health and pre-clinical research (small animals research)
